# FASCICULE DE BREVET EUROPEEN

(11) **EP 0 907 851 B1**
(45) Date de publication et mention de la délivrance du brevet: **06.08.2003**
(21) Numéro de dépôt: 98921545.4
(22) Date de dépôt: 16.04.1998
(51) Int. Cl.: F16K 27/02, F02D 9/10

(54) **VANNE PAPILLON POUR LA REGULATION DU DEBIT D'UN FLUIDE**
KLAPPE ZUR DURCHFLUSSREGELUNG EINER FLÜSSIGKEIT
BUTTERFLY VALVE FOR REGULATING A FLUID FLOW

(30) Priorité: 18.04.1997 FR 9704992
(43) Date de publication de la demande: 14.04.1999
(73) Titulaire: M.G.I. Coutier S.A., 01410 Champfromier (FR)
(72) Inventeur: BOUVET, Thierry, F-01200 Leaz (FR); BORDELLIER, Franck, F-01200 Confort (FR)
(74) Mandataire: Nithardt, Roland
(86) Numéro de dépôt international: FR9800766
(87) Numéro de publication internationale: WO98048204

(56) Documents cités:
- EP-A- 0 109 792
- EP-A- 0 482 272
- WO-A-96/07041
- DE-A- 19 615 438
- FR-A- 2 687 601
- FR-A- 2 694 963

## Description

La présente invention concerne une vanne papillon pour la régulation du débit d'un fluide notamment du débit d'air à l'entrée d'un répartiteur d'air prévu dans un dispositif d'injection de carburant pour un moteur à combustion interne, cette vanne comportant un boîtier réalisé dans une matière synthétique moulée, dans lequel est ménagé un conduit pour la circulation du fluide, et un volet papillon disposé transversalement au conduit et monté sur un axe de commande guidé dans le boîtier, le volet papillon étant agencé pour se déplacer entre une position de fermeture du conduit dans laquelle le volet papillon est orienté sensiblement perpendiculairement à raxe dudit conduit et une position d'ouverture maximale du conduit dans laquelle le volet papillon est orienté sensiblement parallèlement à l'axe dudit conduit. L'invention concerne également les procédés de fabrication de cette vanne papillon.

Les vannes papillon sont bien connues et utilisées couramment dans l'industrie automobile. Ces vannes papillon sont habituellement conçues pour gérer l'admission d'air dans un répartiteur d'air pour un dispositif d'injection de carburant, par l'intermédiaire d'un volet papillon plus ou moins ouvert. Quand le moteur tourne au ralenti, cette vanne doit permettre le passage d'un débit d'air minimal juste suffisant pour assurer le fonctionnement du moteur. En phase d'accélération, quand le conducteur d'un véhicule agit sur la pédale d'accélérateur, la vanne papillon doit permettre d'augmenter la quantité d'air par l'ouverture instantanée du volet. Pour améliorer la souplesse en phase d'accélération, certaines vannes papillon sont agencées pour permettre le passage d'un débit d'air progressif en phase d'ouverture du volet papillon. A cet effet, la face interne active du boîtier de la vanne, c'est-à-dire la face qui coopère avec le volet entre ses positions d'ouverture et de fermeture, présente une forme complexe pourvue notamment d'un rayon de courbure en aval dudit volet dans sa zone d'ouverture.

De manière connue, les vannes papillon sont réalisées en métal et par exemple en aluminium moulé. Les boîtiers ainsi obtenus sont généralement repris par usinage pour ajuster les dimensions intérieures en fonction du volet. C'est le cas décrit, par exemple, dans la publication EP-A-109 792, où le boîtier de la vanne papillon comporte deux évidements opposés et aménagés dans les zones d'ouverture du volet papillon pour réaliser une progressivité du débit à l'ouverture. Ces évidements sont obtenus par usinage, ce qui implique un coût élevé. En plus, à chaque type de moteur correspond un type de vanne avec un boîtier pourvu d'une face interne active spécifique selon la variation du débit d'air nécessaire au fonctionnement optimum du moteur. Il est donc nécessaire de prévoir autant de moules de fabrication des boîtiers que de types de vanne.

Il est bien connu que les industriels cherchent constamment à réduire les coûts de matière première, de fabrication, de montage et de stockage et à réduire le poids des pièces. Par conséquent, certains fabricants ont réalisé des boîtiers pour vanne papillon en matière synthétique moulée. Deux de ces réalisations sont décrites dans les publications FR-A-2 674 573 et FR-A-2 694 963. Néanmoins, les vannes papillon obtenues ne permettent pas de garantir des débits d'air constants dans le temps. En effet, la matière utilisée est généralement un thermoplastique qui est sensible aux variations d'humidité ainsi qu'aux variations de la température ambiante et de celle du fluide véhiculé. Il en découle des variations sensibles des dimensions internes du boîtier et, par conséquent, du débit d'air pour une position donnée du volet. Ces variations de débit d'air ont une influence sur la carburation et génèrent une pollution accrue des gaz d'échappement.

D'autres vannes papillon sont fabriquées selon le procédé dit de bi-injection utilisant des matières différentes comme décrit dans la publication FR-A-2 687 601 où l'on moule en premier le corps de la vanne puis en second le volet papillon. Ainsi, le volet présente rigoureusement la même forme que le corps. Lors du fonctionnement, le volet risque donc de se coincer dans le corps à cause, notamment, du retrait qui est forcément différent du fait que les deux pièces n'ont pas les mêmes formes extérieures et des variations d'humidité et de température qui génèrent des variations dimensionnelles. Ce procédé de fabrication ne permet pas d'adapter la forme extérieure du volet avec la forme intérieure du corps. De plus, le volet comporte deux disques qui ont pour fonction de le guider en rotation dans ledit corps. Ce système est totalement inefficace dans le temps. Dans la publication EP-A-482 272, le corps sert également d'empreinte pour le volet. Sa forme sera donc dépendante de celle du corps sans possibilité de l'adapter. Il n'est pas possible de prévoir une dépouille sur la face extérieure du volet pour éviter les coincements. Par ailleurs, le volet présentant une forme en Z génère des pertes de charge aérauliques très importantes.

Une autre réalisation de vanne papillon est décrite dans la publication EP-A-0 023 133, cette vanne étant équipée d'un insert en forme de bague prévu dans le conduit et interposé entre le boîtier et le volet. Cette bague est métallique, présente une forme simple annulaire et est entouré du boîtier surmoulé en matière thermoplastique. L'objectif de cette vanne est d'assurer une étanchéité totale lors de la fermeture du volet au moyen de différents joints prévus de part et d'autre de la bague, entre la bague et le boîtier et entre la bague et l'axe du volet papillon. Un manchon métallique supplémentaire est également prévu à l'intérieur du boîtier de part et d'autre de la bague. Cette réalisation est, par conséquent, très complexe et coûteuse compte tenu du nombre important de pièces qu'il faut assembler avant de surmouler le boîtier et ne peut correspondre qu'à un type de moteur. De plus, l'étanchéité totale est proscrite généralement dans l'application prévue pour éviter les risques de blocage du volet.

D'autres réalisations existent encore en référence à la publication WO-A-96 07041 décrit une vanne papillon composée d'un corps réalisé en deux parties, d'une bague formant un siège et d'un volet papillon. Les différentes pièces sont fabriquées individuellement puis assemblées, ce qui implique un coût de fabrication et d'assemblage élevé et nécessite un encombrement plus important. D'autre part, il est indispensable de réaliser une étanchéité parfaite entre les différentes pièces (les deux parties du corps et la bague) générant de ce fait un surcoût. Dans le cas où le boîtier papillon est disposé en bout de répartiteur, il est soumis à de fortes accélérations et vibrations et doit donc être très rigide pour garantir une bonne tenue mécanique. Cette rigidité est difficilement obtenue si le boîtier est réalisé en plusieurs pièces. On retrouve partiellement ses inconvénients dans la vanne objet de la publication DE-A-196 15 438 et dont le boîtier est réalisé en deux parties, la bague et le volet étant obtenus par un procédé de bi-injection. Le point le plus critique est le risque de coincement du volet dans le boîtier étant donné que le volet passe par une position perpendiculaire à l'axe dudit boîtier. De plus, la bague intérieure présente deux épaulements qui induisent des pertes de charge aérauliques en pleine ouverture et pénalisent ainsi le remplissage des cylindres de combustion du moteur.

Le but de la présente invention est de pallier les inconvénients mentionnés ci-dessus en proposant une vanne papillon d'une grande simplicité comportant un nombre de pièces minimal, réalisable à moindre coût, d'un poids réduit, qui puisse convenir à différents types de moteur, cette vanne étant agencée pour être dimensionnellement stable, invariable aux variations d'humidité et de température, afin de garantir un débit d'air constant dans le temps d'une très grande précision, même en position fermée.

Ce but est atteint par une vanne papillon telle que définie en préambule et caractérisée en ce qu'elle comporte une bague coaxiale au conduit et interposée entre le boîtier et le volet papillon, cette bague étant pourvue d'un alésage de guidage transversal destiné à recevoir l'axe de commande du volet et comportant une face interne active formant un siège pour ledit volet papillon en position fermée, la bague étant réalisée dans une matière présentant une bonne stabilité dimensionnelle et le boîtier étant moulé autour de ladite bague dans une matière résistant aux contraintes techniques imposées et en ce que ladite bague est agencée de telle manière que, quand le volet est en position fermée, il subsiste un jeu déterminé entre la face interne active de la bague et le volet papillon agencé pour autoriser un débit de fluide minimal et constant dans le temps quelles que soient les variations d'humidité et de température.

Dans une forme de réalisation préférée de l'invention, le boîtier présente une forme standard pour plusieurs types de moteur et la bague et le volet présentent une forme adaptée à chaque type de moteur. La technicité de la vanne est de ce fait centralisée sur la bague, le boîtier n'ayant qu'une fonction de support et d'intégration aux pièces environnantes.

Compte tenu des contraintes fonctionnelles et dimensionnelles de la bague, cette dernière est réalisée dans une matière choisie parmi les métaux, les alliages métalliques, les matières synthétiques thermodurcissables ou thermoplastiques, l'aluminium étant compris dans les métaux.

Le boîtier, devant assurer une bonne tenue mécanique de l'ensemble et être insensible aux vibrations et aux chocs, est réalisé dans une matière choisie parmi les matières synthétiques thermoplastiques.

Le volet papillon, devant satisfaire également aux contraintes dimensionnelles, est réalisé dans une matière choisie parmi les métaux, les alliages métalliques ou les matières synthétiques thermodurcissables, l'aluminium étant compris dans les métaux. Néanmoins, certains volets papillon peuvent être réalisés dans une matière synthétique thermoplastique si les contraintes sont moins sévères.

La face interne active de la bague peut présenter une forme simple sensiblement cylindrique ou une forme complexe pourvue au moins d'une zone partiellement sphérique prévue au moins en aval dans le sens d'ouverture du volet, cette zone étant agencée pour autoriser le passage d'un débit de fluide progressif au moins en début d'ouverture du volet.

La bague se prolonge avantageusement à l'intérieur du boîtier perpendiculairement à l'axe du conduit, l'alésage de guidage de l'axe de commande du volet étant prévu dans ce prolongement, la surface de contact entre le boîtier et la bague formant une zone d'étanchéité et la surface de contact entre la bague et l'axe formant également une zone d'étanchéité.

Dans une variante de réalisation, la bague peut comporter à ses deux extrémités, éloignées de sa face interne active, au moins une zone périphérique intérieure de moindre épaisseur agencée pour se déformer lors du surmoulage du boîtier. Ainsi, la bague peut comporter à ses deux extrémités une gorge annulaire délimitant une lèvre annulaire extérieure et une lèvre annulaire intérieure, cette dernière formant ladite zone de moindre épaisseur.

Le boîtier peut être rapporté sur un répartiteur d'air par soudure ou peut être avantageusement intégré dans un répartiteur d'air par moulage en une seule pièce.

L'invention concerne également un procédé de fabrication d'une vanne telle que définie ci-dessus caractérisé en ce que l'on réalise une bague dans une matière présentant une bonne stabilité dimensionnelle, l'on dispose cette bague dans un moule, l'on moule un boîtier autour de cette bague dans une matière synthétique résistante aux contraintes techniques imposées.

Dans une forme de réalisation, l'on moule une bague dans une empreinte, autour d'au moins une broche dont la forme extérieure correspond à la forme de la face interne active de la bague et l'on moule ensuite le boîtier autour de la bague et autour de ladite broche dont le diamètre extérieur correspond au diamètre du conduit.

On peut prévoir une pluralité de broches de formes différentes de manière à varier la forme de la face interne active de la bague. De cette manière, il est très facile d'adapter la forme de cette face interne en fonction du type de moteur.

Il est possible de reprendre par usinage la face interne active de la bague après le moulage du boîtier pour ajuster ses dimensions et ses formes intérieures en fonction du volet, avant de monter ce dernier dans le boîtier au moyen de son axe de commande traversant et guidé dans l'alésage correspondant prévu dans la bague.

Selon un autre procédé de fabrication d'une vanne selon l'invention, on procède dans l'ordre aux opérations suivantes :
- mise en place de l'axe dans un premier moule,
- moulage de la bague autour de l'axe dans une matière présentant une bonne stabilité dimensionnelle,
- mise en place de l'ensemble "axe-bague" dans un second moule, et
- surmoulage simultané du boîtier et du volet autour dudit ensemble dans des matières résistant aux contraintes techniques imposées. Pour le boîtier et le volet, on peut choisir des matières identiques ou différentes selon les besoins.

De manière avantageuse, on prévoit sur l'axe des aspérités formant une zone d'accroche pour maintenir ledit volet surmoulé.

De préférence, on surmoule le boîtier selon une forme standard adaptée à plusieurs types de moteur et l'on moule la bague selon une forme adaptée à chaque type de moteur.

Dans l'une des variantes de réalisation, on moule avec le boîtier le répartiteur d'air en un seul tenant et en une seule opération.

D'une manière avantageuse, la matière du boîtier est chimiquement compatible avec celle de la bague pour qu'elles adhèrent l'une à l'autre et assurent une étanchéité entre la bague et le boîtier.

La présente invention et ses avantages apparaîtront mieux dans la description suivante d'exemples de réalisation, en référence aux dessins annexés, dans lesquels :
- la figure 1 est une vue en coupe longitudinale d'une première forme de réalisation de la vanne papillon selon l'invention, passant par l'axe du volet papillon,
- la figure 2 est une vue en coupe longitudinale d'une seconde forme de réalisation de l'invention, perpendiculairement à l'axe du volet papillon,
- la figure 3 est une vue éclatée et en perspective du volet et de son axe de commande,
- la figure 4 est une vue simplifiée en coupe longitudinale d'une vanne papillon rapportée sur un répartiteur,
- la figure 5 est une vue simplifiée en coupe longitudinale d'une vanne papillon intégrée à un répartiteur,
- la figure 6 représente un exemple d'un procédé de fabrication de la vanne selon l'invention,
- les figures 7A et 7B représentent, en coupe longitudinale, une autre forme de réalisation de l'invention obtenue selon un autre procédé de fabrication, et
- les figures 8A et 8B représentent, en coupe longitudinale, encore une autre forme de réalisation de l'invention.

La vanne papillon selon l'invention est généralement utilisée à l'entrée d'un répartiteur d'air dans un dispositif d'injection de carburant pour un moteur à explosion.

Néanmoins, cette vanne peut être utilisée dans tout autre dispositif pour réguler le débit d'un fluide liquide ou gazeux.

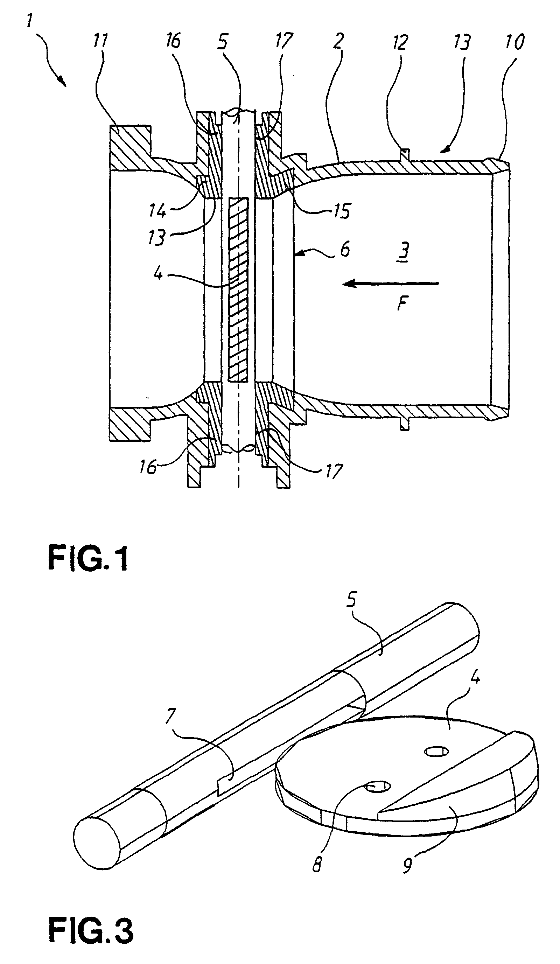

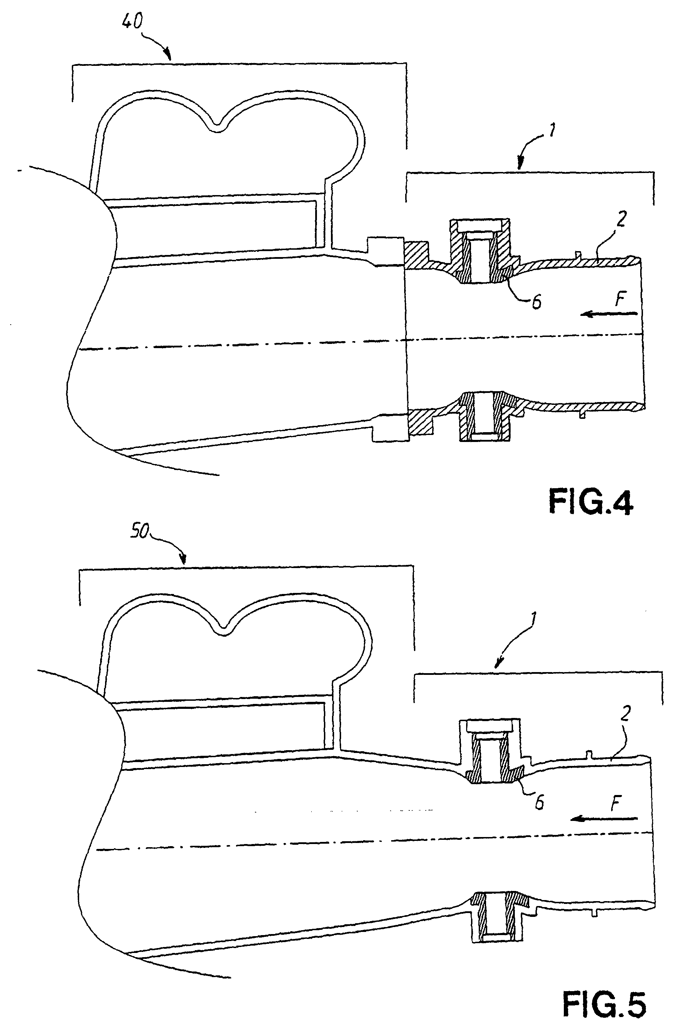

En référence aux figures 1 et 3, cette vanne papillon 1 comporte un boîtier 2 dans lequel est ménagé un conduit 3 pour véhiculer un fluide dans le sens de la flèche F, un volet papillon 4 rotatif, monté sur un axe de commande 5, transversalement au conduit 3 et une bague 6 prévue entre le boîtier 2, le volet papillon 4 et son axe de commande 5. Le volet papillon 4 est mobile entre une position de fermeture du conduit 3 dans laquelle il est orienté sensiblement perpendiculairement à l'axe de ce conduit et une position d'ouverture maximale du conduit 3 dans laquelle il est orienté sensiblement parallèlement à l'axe de ce conduit. Cette vanne papillon 1 est conçue pour garantir un débit d'air constant dans le temps, quelles que soient les variations d'humidité et de température, de manière à garantir le bon fonctionnement du moteur afin de respecter les normes antipollution en vigueur (EURO 2000). Cette exigence impose une maîtrise parfaite des dimensions extérieures du volet 4 et intérieures de la bague 6 ainsi qu'une stabilité de ces dimensions dans le temps.

Par conséquent, le volet papillon 4 est réalisé dans une matière dimensionnellement stable. Cette matière peut être un métal, comme par exemple l'aluminium, un alliage métallique, ou une matière synthétique thermodurcissable, voire thermoplastique dans certains cas. Le volet présente une forme générale en disque. Selon un premier procédé de fabrication, ce volet est monté dans un logement 7 traversant prévu dans l'axe de commande 5, après assemblage de cet axe 5 dans le boîtier 2. Il est ensuite fixé au moyen de vis ou de tout autre moyen de fixation au travers des trous 8 prévus dans le volet 4. Ce volet 4 peut présenter une zone de surépaisseur 9 présentant un plan incliné en direction de l'axe de commande 5. Cette zone de surépaisseur 9 est localisée sur la face du volet 4 communiquant avec le fluide et sur le pan de ce volet qui se déplace à contre courant du fluide lors de l'ouverture dudit volet. Elle a pour fonction de réaliser une progressivité du débit du fluide et de diriger ledit fluide vers la zone d'ouverture. Bien entendu, les formes du volet papillon 4 peuvent varier en fonction des contraintes mécaniques, de la nature du fluide, de la puissance du moteur, etc.

Le boîtier 2, qui n'a qu'une fonction de support et d'intégration aux pièces eavironnantes, est réalisé dans une matière synthétique moulée, résistant aux contraintes techniques imposées par un cahier de charges et notamment aux chocs, aux vibrations et aux températures élevées. Cette matière est de préférence un thermoplastique, tel que par exemple un polyétherimide (PEI) ou un polyamide (PA) par exemple chargé en fibres de verre. Ce type de matière présente des avantages importants, notamment au niveau du prix de revient, du poids, de la facilité d'intégration aux autres pièces, de la possibilité et de la facilité de prévoir différents types d'assemblage par soudure ultrasons, soudure thermique ou avec lame chauffante, par vibration, par clippage, et des possibilités de finition multiples. La forme générale du boîtier 2 est tubulaire et présente deux extrémités ouvertes destinées à être assemblées, la première 10 à un conduit d'air provenant du filtre à air ou directement au filtre à air, et la seconde 11 à un répartiteur d'air. La première extrémité 10 est légèrement évasée pour s'emmancher sur le conduit d'air ou sur le filtre à air et comporte un bourrelet extérieur 12 délimitant un emplacement 13 pour un collier de serrage. La seconde extrémité 11 comporte une bride destinée à recevoir un joint ou à être soudée sur le corps du répartiteur. De part sa fonction. ce boîtier 2 peut être conçu pour s'adapter à plusieurs types de moteur et devient par conséquent une pièce standard pouvant être réalisée dans un moule unique.

Comme exposé ci-dessus, la bague 6 joue un rôle fondamental et constitue l'organe essentiel et fonctionnel de la vanne. A cet effet, elle doit être réalisée dans une matière dimensionnellement stable et insensible aux variations de température et d'humidité. Cette matière peut être un métal, comme par exemple l'aluminium, un alliage métallique, une matière synthétique thermodurcissable ou thermoplastique. Cette bague 6 présente une face interne active 13 formant un siège pour le volet papillon 4 et de forme sensiblement cylindrique. Dans l'exemple de réalisation illustré, cette face interne active 13 définit un diamètre inférieur au diamètre du conduit 3 et est prolongée de part et d'autre par un rebord périphérique 14, 15 évasé pour relier la face interne active 13 au conduit. La bague 6 se prolonge également à l'intérieur du boîtier 2 par au moins deux protubérances 16 diamétralement opposées et disposées perpendiculairement à l'axe du conduit 3. Ces protubérances 16 sont chacune traversées par un alésage de guidage 17 agencé pour recevoir et guider l'axe de commande 5 du volet papillon 4. Cet axe de commande est accessible de l'extérieur du boîtier 2 de la vanne pour être couplé à tout organe de commande connu par l'homme de métier. La forme de la bague 6 et plus spécialement la géométrie de sa face interne active 13 est définie en fonction du moteur. Dans l'exemple représenté, la face interne active présente une forme cylindrique simple, mais on verra plus loin qu'elle peut être plus complexe. Le dimensionnement de cette bague 6 permettra d'ajuster le débit d'air pour obtenir une carburation optimale pour chaque type de moteur. De plus, quand le volet papillon 4 est en position fermée, la face interne active 13 de la bague 6 est dimensionnée de telle manière qu'il persiste un jeu déterminé pour autoriser un débit d'air minimal et constant. On comprend à présent la nécessité de choisir un matériau dimensionnellement stable pour réaliser la bague 6 et le volet 4. En effet, on obtient ainsi une maîtrise totale du jeu existant entre ces deux pièces 4, 6 ainsi qu'une grande précision et une excellente constance du débit d'air. Par exemple, en position fermée, le jeu permet le passage d'un débit d'air de 2,5 kg/h avec une précision de + ou - 0,2 kg/h. On rappelle ici que la qualité de la combustion et celle des gaz d'échappement sont étroitement liées au mélange air/carburant admis dans les cylindres du moteur. Toute variation intempestive du débit d'air nuit à cette combustion et entraine un accroissement de la pollution.

Pour réaliser la vanne papillon telle que représentée dans les figures 1 et 3, selon un premier procédé de fabrication, on fabrique séparément le volet papillon 4 et son axe de commande 5 dans une matière choisie en fonction des contraintes mécaniques et dimensionnelles. On fabrique également séparément la bague 6, soit par usinage, soit par moulage selon la matière choisie. Ensuite la bague 6 est insérée dans le moule destiné à fabriquer le boîtier 2 et l'on surmoule ce boîtier 2 autour de la bague 6. Les rebords périphériques 14, 15 de la bague 6 assurent une résistance contre la pression d'injection pour éviter l'affaissement de cette bague. Le boîtier 2 enrobe entièrement la bague 6. Les matières respectives sont également choisies pour assurer une cohésion entre elles de manière à créer une zone d'étanchéité parfaite entre la bague 6 et le boîtier 2. Cette astuce de fabrication évite l'addition de joints spécifiques. Le boîtier 2 ainsi moulé, équipé de sa bague 6 est complété par l'axe de commande 5 et le volet papillon 4 correspondant Le diamètre de l'alésage de guidage 17 prévu dans la bague 6 correspond au diamètre de l'axe de commande 5, sans jeu pour assurer une étanchéité entre ces deux pièces. Avant de monter le volet papillon 4, il est toutefois possible de reprendre par usinage la face interne active 13 de la bague 6 après moulage dans le but d'ajuster plus précisément ses dimensions et formes intérieures.

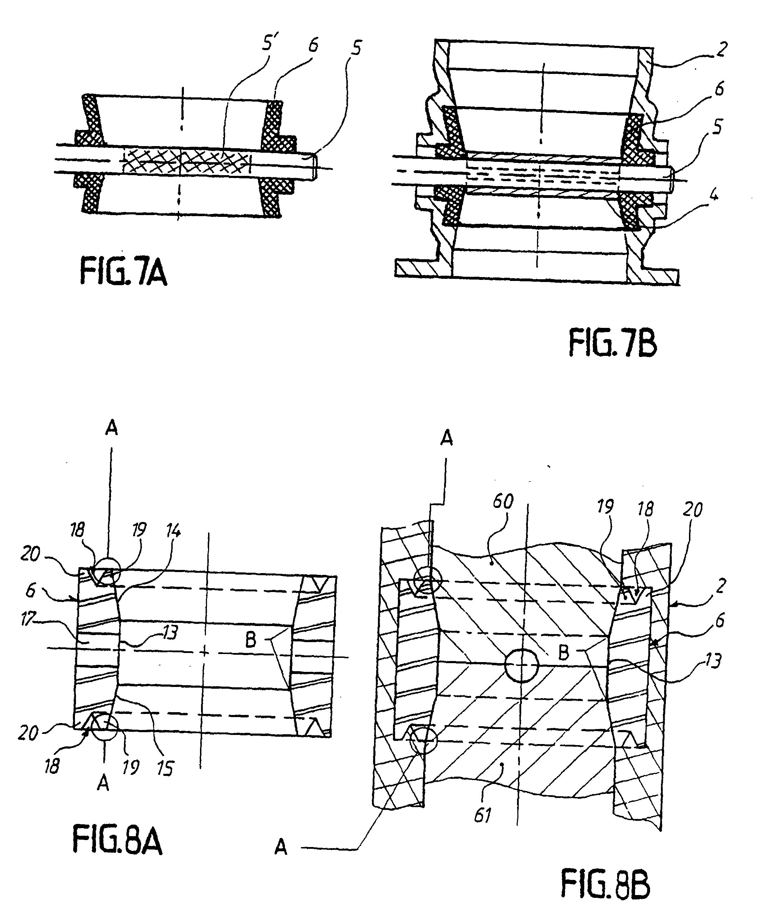

Les figures 8A et 8B illustrent une variante de réalisation de la bague 6. On retrouve, sur cette bague 6, la face interne active 13, les deux rebords périphériques 14, 15 évasés et les deux alésages de guidage 17. Elle comporte en plus (cf. Fig. 8A), à ses deux extrémités, une gorge annulaire 18 en forme de V délimitant deux lèvres annulaires 19, 20, soit une lèvre intérieure 19 et une lèvre extérieure 20. Cette gorge 18 est formée lors du moulage ou de l'usinage de la bague 6 réalisée par exemple en aluminium ou dans toute autre matière dimensionnellement stable énumérée ci-dessus. Les lèvres intérieures 19 créent une zone annulaire de déformation privilégiée A lors du surmoulage du boîtier 2. En effet et en référence à la figure 8B, les lèvres 19 de la bague 6 se conforment par déformation des zones A sur les portées de surmoulage des broches 60, 61 générant ainsi une étanchéité suffisante pour empêcher l'infiltration de matière plastique à l'intérieur de la bague 6. La finesse et la grande ductilité des lèvres 19 par rapport aux zones fonctionnelles, repérées par B et correspondant aux arêtes délimitant la face interne active 13, permettent à ces dernières de ne pas se déformer lors du surmoulage. La déformation des zones A ne se répercute pas sur les zones fonctionnelles B. Cette technique de surmoulage par déformation privilégiée permet donc d'établir une étanchéité parfaite sur la bague 6, réalisée par exemple en aluminium brute de fonderie ou usinée, donc ayant une précision approximative, sans déformer ses zones fonctionnelles.

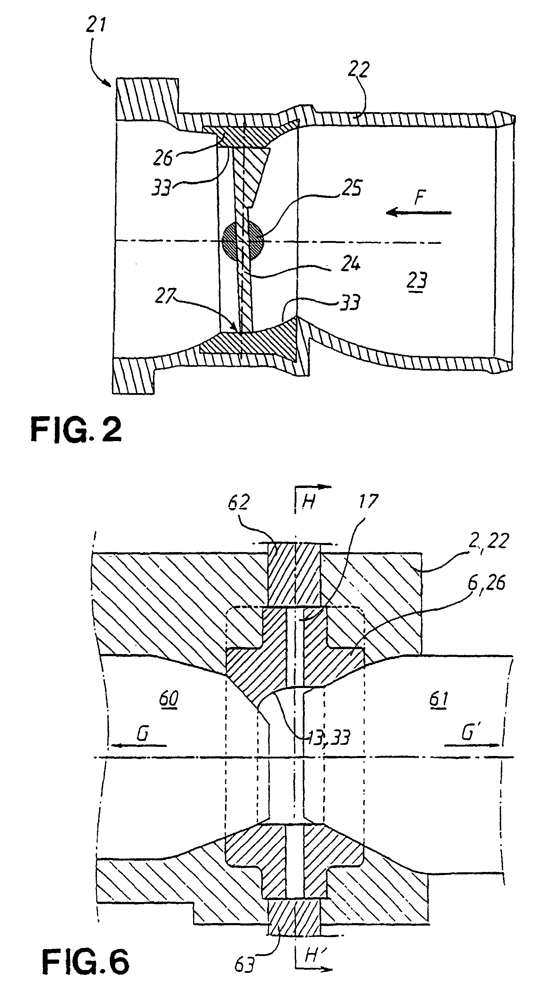

La figure 2 illustre une variante de réalisation d'une vanne papillon 21 selon l'invention dans laquelle, on retrouve un boîtier 22 traversé par un conduit 23, un volet papillon 24 avec son axe de commande 25 et une bague 26 dont la face interne active 33 présente une forme plus complexe que celle de l'exemple précédent. En effet, la face interne active 33 de la bague 26 présente, dans la zone d'ouverture du volet 24, une forme sensiblement sphérique 27. Cette forme a l'avantage de libérer progressivement l'air en début d'ouverture du volet 24, générant ainsi un débit d'air progressif.

Les figures 4 et 5 illustrent deux variantes d'assemblage de la vanne papillon 1 avec un répartiteur 40, 50. Dans la figure 4, la vanne 1 constitue une pièce distincte qui est rapportée sur le répartiteur 40 par exemple par soudure. Dans la figure 5, la vanne 1 fait partie intégrante du répartiteur 50, le boîtier 2 de la vanne 1 étant moulé d'une seule pièce avec le corps dudit répartiteur 50. Dans cette réalisation, on place directement la bague 6 dans le moule du répartiteur 50.

La figure 6 illustre un exemple de réalisation d'un boîtier 2 d'une vanne papillon 1 selon un deuxième procédé de fabrication, dans lequel le boîtier 2 est surmoulé autour d'une bague 6 préalablement moulée, et autour de deux broches 60, 61 qui définissent les formes intérieures de ce boîtier. L'extrémité de ces broches 60, 61 épouse les volumes intérieurs de la bague 6, laquelle a été préalablement moulée autour de broches appropriées. L'outillage de surmoulage de ce boîtier 2 comporte deux tiroirs 62, 63 disposés dans l'axe de l'alésage de guidage 17 ménagé dans la bague 6. Ils sont agencés pour créer les évidements nécessaires au passage de l'axe de commande du volet papillon. Quand l'opération de moulage est terminée, les broches 60, 61 et les tiroirs 62, 63 se retirent selon les flèches G, G', H, H' et le boîtier 2 muni de sa bague 6 peut être retiré du moule.

Les figures 7A et 7B illustrent une variante de réalisation de la vanne 1 selon un troisième procédé de fabrication. Dans une première phase de fabrication, on met en place l'axe de commande 5 du volet 4 dans un moule pour mouler la bague 6 autour de l'axe 5. L'ensemble "axe-bague" 5, 6 ainsi obtenu est illustré par la figure 7A. Sur cet axe 5, on prévoit au moins une zone d'accroche 5' destinée à recevoir et à maintenir le volet 4. Cette zone d'accroche 5' peut être constituée de méplats, de stries, d'un moletage ou de toute autre aspérité. Dans une seconde phase de fabrication, on met en place l'ensemble "axe-bague" 5, 6 dans un moule et on surmoule le boîtier 2 et simultanément le volet 4 autour dudit ensemble "axe-bague" 5, 6. On obtient la vanne illustrée par la figure 7B. Le volet 4 est maintenu fermement sur son axe 5 grâce à la zone d'accroche 5'. Les matières choisies pour les différentes pièces sont similaires à celles données dans les exemples précédents.

Il apparaîtra clairement que ce troisième procédé de fabrication permet d'offrir de nombreux avantages. Ce procédé supprime le temps de montage de l'axe 5 dans le boîtier 2 et l'opération délicate et coûteuse de l'assemblage du volet 4 sur son axe 5 par des vis. Le volet 4 étant surmoulé en même temps que le boîtier 2, le temps de fabrication global est diminué. Le volet 4 étant surmoulé dans la bague 6, il épouse parfaitement la forme intérieure de cette bague limitant ainsi au minimum la fuite du fluide entre l'amont et l'aval du volet 4 et évitant également la reprise par usinage pour ajuster le volet 4 à la bague 6. Cette fuite est principalement due au retrait du volet après moulage. La zone d'accroche 5' prévue sur l'axe 5 pour le maintien du volet 4 évite l'opération délicate d'usinage de l'axe 5 pour l'accostage et le maintien du volet 4. Le fait de surmouler la bague 6 sur l'axe 5, on supprime les défauts d'alignement entre les deux portées de l'axe 5 dans ladite bague 6. Le boîtier 2 et le volet 4 étant surmoulés simultanément, il est possible d'utiliser aussi bien des matières identiques que différentes adaptées aux fonctions des pièces. Dans ce dernier cas, il s'agit d'une injection bi-matière.

Selon encore un autre procédé de fabrication, on pourrait prévoir les phases opératoires suivantes :
1) monter ou mouler le volet sur son axe,
2) surmouler la bague autour de l'ensemble "volet-axe",
3) surmouler le boîtier autour de l'ensemble "volet-axe-bague".
Néanmoins, ce procédé nécessite une étape de moulage supplémentaire par rapport au procédé décrit précédemment.

Il ressort clairement de cette description que l'invention permet d'atteindre tous les objectifs fixés.

La présente invention n'est pas limitée aux exemples de réalisation décrits, ni aux différents procédés de fabrication mentionnés, mais s'étend à toute modification et variante évidente pour un homme du métier. Notamment, la vanne papillon objet de la présente invention n'est pas limitée à l'application décrite mais s'étend à toute autre application nécessitant la régulation d'un débit de fluide et à tout type de fluide.

## Revendications

1. Vanne papillon (1, 21) pour la régulation du débit d'un fluide notamment du débit d'air à l'entrée d'un répartiteur d'air dans un dispositif d'injection de combustible pour un moteur à combustion interne, cette vanne comportant un boîtier (2, 22) réalisé dans une matière synthétique moulée, dans lequel est ménagé un conduit (3, 23) pour la circulation du fluide, et un volet papillon (4, 24) disposé transversalement au conduit et monté sur un axe de commande (5, 25) guidé dans le boîtier, le volet papillon (4, 24) étant agencé pour se déplacer entre une position de fermeture du conduit dans laquelle le volet papillon est orienté sensiblement perpendiculairement à l'axe dudit conduit et une position d'ouverture maximale du conduit dans laquelle le volet papillon est orienté sensiblement parallèlement à l'axe dudit conduit, **caractérisée en ce qu'**elle comporte une bague (6, 26) coaxiale au conduit (3, 23) et interposée entre le boîtier (2, 22) et le volet papillon (4, 24), cette bague étant pourvue d'un alésage de guidage (17) transversal destiné à recevoir l'axe de commande (5, 25) du volet et comportant une face interne active (13, 33) formant un siège pour ledit volet papillon (4, 24) en position fermée, la bague (6, 26) étant réalisée dans une matière présentant une bonne stabilité dimensionnelle et le boîtier (2, 22) étant moulé autour de ladite bague dans une matière résistant aux contraintes techniques imposées et **en ce que** ladite bague (6, 26) est agencée de telle manière que, quand le volet (4, 24) est en position fermée, il subsiste un jeu déterminé entre la face interne active (13, 33) de la bague (6, 26) et le volet papillon (4, 24) agencé pour autoriser un débit de fluide minimal et constant dans le temps quelles que soient les variations d'humidité et de température.

2. Vanne selon la revendication 1, **caractérisée en ce que** le boîtier (2, 22) présente une forme standard pour plusieurs types de moteur et la bague (6, 26) et le volet (4, 24) présentent une forme adaptée à chaque type de moteur.

3. Vanne selon la revendication 2, **caractérisée en ce que** la bague (6, 26) et le volet (4, 24) sont réalisés dans une matière choisie parmi les métaux, les alliages métalliques, les matières synthétiques thermodurcissables ou thermoplastiques.

4. Vanne selon la revendication 2, **caractérisée en ce que** le boîtier (2, 22) est réalisé dans une matière choisie parmi les matières synthétiques thermoplastiques.

5. Vanne selon l'une quelconque des revendications précédentes, **caractérisée en ce que** la face interne active (13) de la bague présente une forme simple sensiblement cylindrique.

6. Vanne selon l'une quelconque des revendications précédentes, **caractérisée en ce que** la face interne active (33) de la bague présente une forme complexe pourvue au moins d'une zone (27) partiellement sphérique prévue en aval dans le sens de l'ouverture du volet (24), cette zone étant agencée pour autoriser un débit de fluide progressif au moins en début d'ouverture du volet.

7. Vanne selon l'une quelconque des revendications précédentes, **caractérisée en ce que** la bague (6, 26) se prolonge à l'intérieur du boîtier (2, 22) perpendiculairement à l'axe du conduit (3, 23), l'alésage de guidage (17) étant prévu dans ce prolongement (16), la surface de contact entre le boîtier (2, 22) et la bague (6, 26) formant une zone d'étanchéité et la surface de contact entre la bague (6, 26) et l'axe de commande (5, 25) formant également une zone d'étanchéité.

8. Vanne selon l'une quelconque des revendications précédentes, **caractérisée en ce que** la bague (6, 26) comporte à ses deux extrémités, éloignées de sa face interne active (13, 33), au moins une zone périphérique intérieure (A) de moindre épaisseur agencée pour se déformer lors du surmoulage du boîtier (2).

9. Vanne selon la revendication 8, **caractérisée en ce que** la bague (6, 26) comporte à ses deux extrémités une gorge annulaire (18) délimitant une lèvre annulaire extérieure (20) et une lèvre annulaire intérieure (19), cette dernière formant ladite zone (A) de moindre épaisseur.

10. Vanne selon l'une quelconque des revendications précédentes, **caractérisée en ce que** le boîtier (2) est rapporté sur un répartiteur d'air (40) par soudure.

11. Vanne selon l'une quelconque des revendications précédentes, **caractérisée en ce que** le boîtier (2) est intégré dans un répartiteur d'air (50) par moulage en une seule pièce.

12. Procédé de fabrication d'une vanne selon l'une quelconque des revendications 1 à 11, **caractérisé en ce que** l'on réalise une bague (6, 26) dans une matière présentant une bonne stabilité dimensionnelle, l'on dispose cette bague (6, 26) dans un moule et l'on moule un boîtier (2, 22) autour de cette bague dans une matière synthétique résistante aux contraintes techniques imposées, et l'on complète le boîtier ainsi moulé, équipé de sa bague, par l'axe de commande (5, 25) et le volet de papillon (4, 24) correspondant.

13. Procédé selon la revendication 12, **caractérisé en ce que** l'on moule une bague (6, 26) dans une empreinte et autour d'au moins une broche dont la forme extérieure correspond à la forme de la face interne active (13, 33) de la bague et **en ce que** l'on moule ensuite le boîtier (2, 22) autour de la bague et autour d'au moins une broche (60, 61) dont le diamètre extérieur correspond au diamètre du conduit (3, 23).

14. Procédé selon la revendication 13, **caractérisé en ce que** l'on prévoit une pluralité de broches (60, 61) de formes différentes de manière à varier la forme de la face interne active (13, 33) de la bague (6, 26).

15. Procédé selon la revendication 13, **caractérisé en ce que** l'on reprend par usinage la face interne active (13, 33) de la bague après moulage du boîtier (2, 22) pour ajuster les dimensions et les formes intérieures de cette bague (6, 26) et l'on monte le volet (4, 24) dans le boîtier (2, 22) au moyen de son axe de commande (5, 25) traversant et guidé dans l'alésage (17) correspondant prévu dans la bague (6, 26).

16. Procédé de fabrication d'une vanne selon l'une quelconque des revendications 1 à 11, **caractérisé en ce que** l'on procède dans l'ordre aux opérations suivantes :
- mise en place de l'axe (5) dans un premier moule,
- moulage de la bague (6) autour de l'axe (5) dans une matière présentant une bonne stabilité dimensionnelle,
- mise en place de l'ensemble "axe-bague" (5, 6) dans un second moule, et
- surmoulage simultané du boîtier (2) et du volet (4) autour dudit ensemble (5, 6) dans des matières résistant aux contraintes techniques imposées.

17. Procédé selon la revendication 16, **caractérisé en ce que** l'on prévoit sur l'axe (5) des aspérités formant une zone d'accroche (5') pour maintenir ledit volet (4) surmoulé.

18. Procédé selon l'une quelconque des revendications de 12 à 17, **caractérisé en ce que** l'on surmoule le boîtier (2, 22) selon une forme standard adaptée à plusieurs types de moteur et l'on réalise la bague (6, 26) et le volet (4, 24) selon une forme adaptée à chaque type de moteur.

19. Procédé selon l'une quelconque des revendications de 12 à 18, **caractérisée en ce que** l'on moule avec le boîtier (2) le répartiteur d'air (50) en seul tenant et en une seule opération.

20. Procédé selon l'une quelconque des revendications de 12 à 19, **caractérisé en ce que** la matière du boîtier (2, 22) est chimiquement compatible avec celle de la bague (6, 26) pour qu'elles adhèrent l'une à l'autre et assurent une étanchéité entre la bague et le boîtier.

## Patentansprüche

1. Drosselventil (1, 21) zur Regelung des Durchflusses eines Fluids insbesondere des Durchflusses von Luft am Eingang eines Luftverteilers in einer Kraftstoffeinspritzvorrichtung für einen Verbrennungsmotor, wobei dieses Ventil ein aus einem geformten Kunststoff gefertigtes Gehäuse (2, 22) enthält, in dem eine Leitung (3, 23) für die Zirkulation des Fluids ausgebildet ist, und eine Drosselklappe (4, 24), die quer zu der Leitung angeordnet und an einer in dem Gehäuse geführten Steuerachse (5, 25) angebracht ist, wobei die Drosselklappe (4, 24) angeordnet ist, um sich zwischen einer Schließstellung der Leitung, in der die Drosselklappe im Wesentlichen senkrecht zur Achse der genannten Leitung ausgerichtet ist, und einer maximalen Öffnungsstellung der Leitung, in der die Drosselklappe im Wesentlichen parallel zur Achse der genannten Leitung ausgerichtet ist, zu bewegen, **dadurch gekennzeichnet, dass** es einen Ring (6, 26) enthält, der koaxial zur Leitung (3, 23) verläuft und zwischen dem Gehäuse (2, 22) und der Drosselklappe (4, 24) eingefügt ist, wobei dieser Ring mit einer querlaufenden Führungsbohrung (17) zur Aufnahme der Steuerachse (5, 25) der Klappe versehen ist und eine aktive Innenfläche (13, 33) enthält, die einen Sitz für die genannte Drosselklappe (4, 24) in der geschlossenen Position bildet, wobei der Ring (6, 26) aus einem Material gefertigt ist, das eine gute Maßbeständigkeit aufweist und wobei das Gehäuse (2, 22) um den genannten Ring aus einem Material geformt ist, das den auferlegten technischen Beanspruchungen standhält, und dass der genannte Ring (6, 26) derart angeordnet ist, dass wenn sich die Klappe (4, 24) in der geschlossenen Position befindet ein bestimmtes Spiel zwischen der aktiven Innenfläche (13, 33) des Rings (6, 26) und der Drosselklappe (4, 24) verbleibt, welche angeordnet ist, um einen minimalen und zeitlich konstanten Fluiddurchfluss zuzulassen, wie groß die Feuchtigkeits- und Temperaturschwankungen auch immer sein mögen.

2. Ventil nach Anspruch 1, **dadurch gekennzeichnet, dass** das Gehäuse (2, 22) eine Standardform für mehrere Motortypen aufweist und der Ring (6, 26) und die Klappe (4, 24) eine an jeden Motortyp angepasste Form aufweisen.

3. Ventil nach Anspruch 2, **dadurch gekennzeichnet, dass** der Ring (6, 26) und die Klappe (4, 24) aus einem Material ausgebildet sind, das ausgewählt ist aus Metallen, Metalllegierungen, warmaushärtenden oder thermoplastischen Kunststoffen.

4. Ventil nach Anspruch 2, **dadurch gekennzeichnet, dass** das Gehäuse (2, 22) aus einem Material ausgebildet ist, das ausgewählt ist aus thermoplastischen Kunststoffen.

5. Ventil nach irgendeinem der vorhergehenden Ansprüche, **dadurch gekennzeichnet, dass** die aktive Innenfläche (13) des Rings eine einfache, im Wesentlichen zylindrische Form aufweist.

6. Ventil nach irgendeinem der vorhergehenden Ansprüche, **dadurch gekennzeichnet, dass** die aktive Innenfläche (33) des Rings eine komplexe Form aufweist, die wenigstens mit einem teilweise kugelförmigen, stromabwärts in Richtung des Öffnens der Klappe (24) vorgesehenen Bereich (27) versehen ist, wobei dieser Bereich angeordnet ist, um wenigstens zu Beginn des Öffnens der Klappe einen zunehmenden Fluiddurchfluss zuzulassen.

7. Ventil nach irgendeinem der vorhergehenden Ansprüche, **dadurch gekennzeichnet, dass** sich der Ring (6, 26) innerhalb des Gehäuses (2, 22) senkrecht zur Achse der Leitung (3, 23) fortsetzt, wobei die Führungsbohrung (17) in dieser Verlängerung (16) vorgesehen ist, wobei die Kontaktfläche zwischen dem Gehäuse (2, 22) und dem Ring (6, 26) einen Dichtungsbereich bildet und wobei die Kontaktfläche zwischen dem Ring (6, 26) und der Steuerachse (5, 25) ebenfalls einen Dichtungsbereich bildet.

8. Ventil nach irgendeinem der vorhergehenden Ansprüche, **dadurch gekennzeichnet, dass** der Ring (6, 26) an seinen beiden, von seiner aktiven Innenfläche (13, 33) entfernten Enden wenigstens einen inneren Umfangsbereich (A) geringerer Dicke enthält, der angeordnet ist, um sich beim Überformen des Gehäuses (2) zu verformen.

9. Ventil nach Anspruch 8, **dadurch gekennzeichnet, dass** der Ring (6, 26) an seinen beiden Enden eine Ringnute (18) enthält, welche eine äußere ringförmige Lippe (20) und eine innere ringförmige Lippe (19) begrenzt, wobei letztere den genannten Bereich (A) geringerer Dicke bildet.

10. Ventil nach irgendeinem der vorhergehenden Ansprüche, **dadurch gekennzeichnet, dass** das Gehäuse (2) an einen Luftverteiler (40) angeschweißt ist.

11. Ventil nach irgendeinem der vorhergehenden Ansprüche, **dadurch gekennzeichnet, dass** das Gehäuse (2) durch einteiliges Formen in einen Luftverteiler (50) integriert ist.

12. Verfahren zur Herstellung eines Ventils nach irgendeinem der Ansprüche 1 bis 11, **dadurch gekennzeichnet, dass** ein Ring (6, 26) aus einem eine gute Maßbeständigkeit aufweisenden Material ausgebildet wird, dieser Ring (6, 26) in einer Form angeordnet wird und ein Gehäuse (2, 22) um diesen Ring aus einem den auferlegten technischen Beanspruchungen standhaltenden Kunststoff geformt wird, und das so geformte, mit seinem Ring versehene Gehäuse durch die Steuerachse (5, 25) und die entsprechende Drosselklappe (4, 24) vervollständigt wird.

13. Verfahren nach Anspruch 12, **dadurch gekennzeichnet, dass** ein Ring (6, 26) in einer Vertiefung und um wenigstens einen Stift, dessen äußere Form der Form der aktiven Innenfläche (13, 33) des Rings entspricht, geformt wird, und dass anschließend das Gehäuse (2, 22) um den Ring und um wenigstens einen Stift (60, 61), dessen Außendurchmesser dem Durchmesser der Leitung (3, 23) entspricht, geformt wird.

14. Verfahren nach Anspruch 13, **dadurch gekennzeichnet, dass** eine Vielzahl von Stiften (60, 61) unterschiedlicher Formen vorgesehen ist, um die Form der aktiven Innenfläche (13, 33) des Rings (6, 26) zu variieren.

15. Verfahren nach Anspruch 13, **dadurch gekennzeichnet, dass** die aktive Innenfläche (13, 33) des Rings nach dem Formen des Gehäuses (2, 22) nachbearbeitet wird, um die Abmessungen und die inneren Formen dieses Rings (6, 26) anzupassen, und dass die Klappe (4, 24) mittels ihrer durchgehenden und in der in dem Ring (6, 26) vorgesehenen entsprechenden Bohrung (17) geführten Steuerachse (5, 25) in dem Gehäuse (2, 22) angebracht wird.

16. Verfahren zur Herstellung eines Ventils nach irgendeinem der Ansprüche 1 bis 11, **dadurch gekennzeichnet, dass** der Reihe nach die folgenden Arbeitsgänge vollzogen werden:
- Einsetzen der Achse (5) in eine erste Form
- Formen des Rings (6) um die Achse (5) aus einem Material, das eine gute Maßbeständigkeit aufweist,
- Einsetzen der Einheit "Achse-Ring" (5, 6) in eine zweite Form, und
- gleichzeitiges Überformen des Gehäuses (2) und der Klappe (4) um das genannte Ganze (5, 6) aus Materialien, welche den auferlegten technischen Beanspruchungen standhalten.

17. Verfahren nach Anspruch 16, **dadurch gekennzeichnet, dass** an der Achse (5) Unebenheiten vorgesehen sind, die einen Haltebereich (5') bilden, um die genannte übergeformte Klappe (4) zu halten.

18. Verfahren nach irgendeinem der Ansprüche 12 bis 17, **dadurch gekennzeichnet, dass** das Gehäuse (2, 22) entsprechend einer an mehrere Motortypen angepassten Standardform übergeformt wird und dass der Ring (6, 26) und die Klappe (4, 24) entsprechend einer an jeden Motortyp angepassten Form ausgebildet werden.

19. Verfahren nach irgendeinem der Ansprüche 12 bis 18, **dadurch gekennzeichnet, dass** mit dem Gehäuse (2) der Luftverteiler (50) in einem Stück und in einem einzigen Arbeitsgang geformt wird.

20. Verfahren nach irgendeinem der Ansprüche 12 bis 19, **dadurch gekennzeichnet, dass** das Material des Gehäuses (2, 22) mit dem des Rings (6, 26) chemisch kompatibel ist, damit sie aneinander haften und eine Dichtheit zwischen dem Ring und dem Gehäuse gewährleisten.

## Claims

1. Butterfly valve (1, 21) for regulating a fluid flow in particular the air flow entering an air distributor provided in a fuel injection device for an internal combustion engine, this valve comprising a housing (2, 22) made of a moulded synthetic material, in which is arranged a conduit (3, 23) for the fluid to circulate, and a butterfly shutter (4, 24) located transversely to the conduit and mounted on a control shaft (5, 25) guided in the housing, the butterfly shutter (4, 24) being designed to move between a position in which the conduit is closed and the butterfly shutter is oriented substantially perpendicular to the conduit's axis and a position in which the conduit is fully open and the butterfly shutter is oriented substantially parallel to said conduit's axis, **characterized in that** it comprises a ring (6, 26) coaxial to the conduit (3, 23) and inserted between the housing (2, 22) and the butterfly shutter (4, 24), this ring being provided with a transversal guide bore (17) designed to receive the shutter's control shaft (5, 25) and comprising an active inner surface (13, 33) forming a seat for said butterfly shutter (4, 24) in the closed position, the ring (6, 26) being made of a material presenting a good dimensional stability and the housing (2, 22) being moulded around said ring in a material which withstands the technical constraints imposed on it and **in that** said ring (6, 26) is arranged in such a way that, when the shutter (4, 24) is in the closed position, there remains a set clearance between the ring's (6, 26) active inner surface (13, 33) and the butterfly shutter (4, 24) designed to allow a minimum fluid flow which is time-constant regardless of the variations in humidity and temperature.

2. Valve according to claim 1, **characterized in that** the housing (2, 22) presents a standard shape for several types of engines and the ring (6, 26) and the shutter (4, 24) present a shape which is adapted to each type of engine.

3. Valve according to claim 2, **characterized in that** the ring (6, 26) and the shutter (4, 24) are made of a material which is chosen from among metals, metal alloys, thermosetting or thermoplastic synthetic materials.

4. Valve according to claim 2, **characterized in that** the housing (2, 22) is made of a material chosen from the thermoplastic synthetic materials.

5. Valve according to any of the previous claims, **characterized in that** the ring's active inner surface (13) presents a substantially cylindrical basic form

6. Valve according to any of the previous claims, **characterized in that** the ring's active inner surface (33) presents a complex form provided with at least one partially spherical zone (27) provided downstream in the shutter's (24) opening direction, this zone being designed to allow a progressive fluid flow to pass through at least when the shutter starts to open.

7. Valve according to any of the previous claims, **characterized in that** the ring (6, 26) extends inside the housing (2, 22) perpendicular to the conduit's (3, 23) axis, the guide bore (17) being provided in this extension (16), the contact surface between the housing (2, 22) and the ring (6, 26) forming a tightness zone and the contact surface between the ring (6, 26) and the control shaft (5, 25) also forming a tightness zone.

8. Valve according to any of the previous claims, **characterized in that** the ring (6, 26) comprises at its both ends, away from its active inner surface (13, 33), at least one thinner internal peripheral zone (A) designed to be deformed when the housing (2) is over moulded.

9. Valve according to claim 8, **characterized in that** the ring (6, 26) comprises at its both ends a ring-shaped groove (18) delimiting an outer ring-shaped lip (20) and an inner ring-shaped lip (19), the latter forming said thinner zone (A).

10. Valve according to any one of the previous claims, **characterized in that** the housing (2) is added onto an air distributor (40) by welding.

11. Valve according to any one of the previous claims, **characterized in that** the housing (2) is incorporated into an air distributor (50) by moulding in one single piece.

12. Method for manufacturing a valve according to any one of the claims 1 to 11, **characterized in that** one makes a ring (6, 26) in a material presenting a good dimensional stability, one places this ring (6, 26) in a mold, one moulds a housing (2, 22) around this ring in a synthetic material which withstands the technical constraints imposed on it and one completes this so moulded housing (2,22) fitted with its ring (6,26) by a control shaft (5,25) and the corresponding butterfly shutter (4,24).

13. Method according to claim 12, **characterized in that** one moulds a ring (6, 26) in a cavity and around at least one spindle, the outer form of which matches the form of the ring's active inner surface (13, 33), and **in that** one moulds the housing (2, 22) around the ring and around at least one spindle (60, 61), the outside diameter of which matches the conduit's (3, 23) diameter.

14. Method according to claim 13, **characterized in that** one provides a plurality of spindles (60, 61) of various forms, so as to vary the form of the ring's (6, 26) active inner surface (13, 33).

15. Method according to claim 13, **characterized in that** one reworks by machining the ring's active inner surface (13, 33) after molding the housing (2, 22) to adjust the dimensions and internal forms of this ring (6, 26) and one assembles the shutter (4, 24) in the housing (2, 22) by means of its control shaft (5, 25) crossing and guided in the corresponding bore (17) provided in the ring (6, 26).

16. Method for manufacturing a valve according to any of the claims 1 to 11, **characterized in that** the following operations are carried out in this order :
• the shaft (5) is placed in a first mould,
• the ring (6) is moulded around the shaft (5) in a material presenting a good dimensional stability,
• the "shaft-ring" set (5, 6) is placed in a second mould, and
• the housing (2) and shutter (4) are over moulded simultaneously around said set (5, 6) in materials withstanding the technical constraints imposed.

17. Method according to claim 16, **characterized in that** one provides roughnesses on the shaft (5) forming a catching zone (5') to maintain said over moulded shutter (4).

18. Method according to any of the claims 12 to 17, **characterized in that** one moulds the housing (2, 22) according to a standard form adapted to several types of engines and one mades the ring (6, 26) and the shutter (4, 24) according to a form adapted to each type of engine.

19. Method according to any of the claims 12 to 18, **characterized in that** one moulds the air distributor (50) with the housing (2) all in one piece and in one operation.

20. Method according to any of the claims 12 to 19, **characterized in that** the housing's (2, 22) material is chemically compatible with that of the ring (6, 26) so that they stick to each other and ensure tightness between the ring and the housing.
